Europäisches Patentamt

(19) European Patent Office

Office européen des brevets

(11) Publication number: **0 067 100**
**B1**

(12) EUROPEAN PATENT SPECIFICATION

(45) Date of publication of patent specification: **06.03.85**

(21) Application number: **82400936.9**

(22) Date of filing: **19.05.82**

(51) Int. Cl.⁴: **B 60 T 11/20**

(54) Master cylinder.

(30) Priority: **04.06.81 US 270428**

(43) Date of publication of application:
**15.12.82 Bulletin 82/50**

(45) Publication of the grant of the patent:
**06.03.85 Bulletin 85/10**

(84) Designated Contracting States:
**DE FR GB IT**

(56) References cited:
**US-A-3 513 655**
**US-A-4 249 381**

(73) Proprietor: **THE BENDIX CORPORATION**
**Executive Offices Bendix Center**
**Southfield Michigan 48037 (US)**

(72) Inventor: **Gaiser, Robert Frank**
**5843 Ponderosa Drive**
**Stevensville Michigan 49127 (US)**
Inventor: **Lohraff, Larry Gene**
**Route No. 2 Box 561-D**
**Berrien Springs Michigan 49103 (US)**

(74) Representative: **Huchet, André et al**
**Service Brevets Bendix 44, rue François 1er**
**F-75008 Paris (FR)**

Courier Press, Leamington Spa, England.

## Description

The present invention relates to a master cylinder, and more particularly to a master cylinder of the kind used in dual brake systems for automotive vehicles.

Such a master cylinder usually includes a housing which receives a pair of pistons movable during braking to generate fluid pressure in respective pressure chambers defined within the housing. In a displacement type master cylinder a pair of lip seals are fixedly disposed within the housing so that the pair of pistons move past the pair of lip seals, respectively.

A master cylinder of this kind and according to the precharacterizing portion of claim 1 is illustrated, for instance, in US—A—4 249 381. The master cylinder disclosed in this patent is provided with a sleeve surrounding the pistons to locate the fixed positions for the pair of lip seals. One of the lip seals is disposed between the end of the sleeve and a shoulder on the housing, while the other lip seal is deposited between a shoulder on the sleeve and a bearing extending into the sleeve. When secured to the housing, this bearing, which slidably carries one of the pistons, holds said sleeve and pair of lip seals in a stationary position within the bore. Other seals cooperate with the housing, the pistons and the sleeve to define one of the pressure chambers and confine at least a portion of said sleeve therewithin. The fluid pressure generated in said one pressure chamber during braking thus acts against both the inner and outer surfaces of the sleeve, and, due to their different areas, tends to deform said sleeve which must be capable of resisting the resulting forces. This, in turn, leads to relatively high manufacturing costs for the master cylinder.

It is, accordingly, an essential object of the present invention to eliminate this drawback of the known master cylinder and to reduce consequently the cost for its construction.

This object is achieved, according to this invention, and in a master cylinder of the kind comprising a housing with an axially extending bore, a pair of pistons movably disposed within the bore and defining therewith a pair of pressure chambers in which they generate fluid pressure when moving within the bore, a sleeve fixedly disposed within the bore around said pistons and having an inner surface and an outer surface both exposed to the fluid pressure generated in one of said pressure chambers, and two pairs of seals cooperating with the sleeve to seal the latter within said one pressure chamber, thanks to the fact that at least one pair of said seals engage said sleeve at substantially the same axial position so that fluid pressure acting against the inner surface adjacent said one pair of seals will be substantially offset by the fluid pressure acting against the outer surface adjacent the same pair of seals.

Thus, it is an advantage of the present invention that a light-weight plastic sleeve can be utilized with a displacement type master cylinder to permit an economical molding to be used to manufacture the plastic sleeve.

Further embodiments of the invention are disclosed in the subclaims.

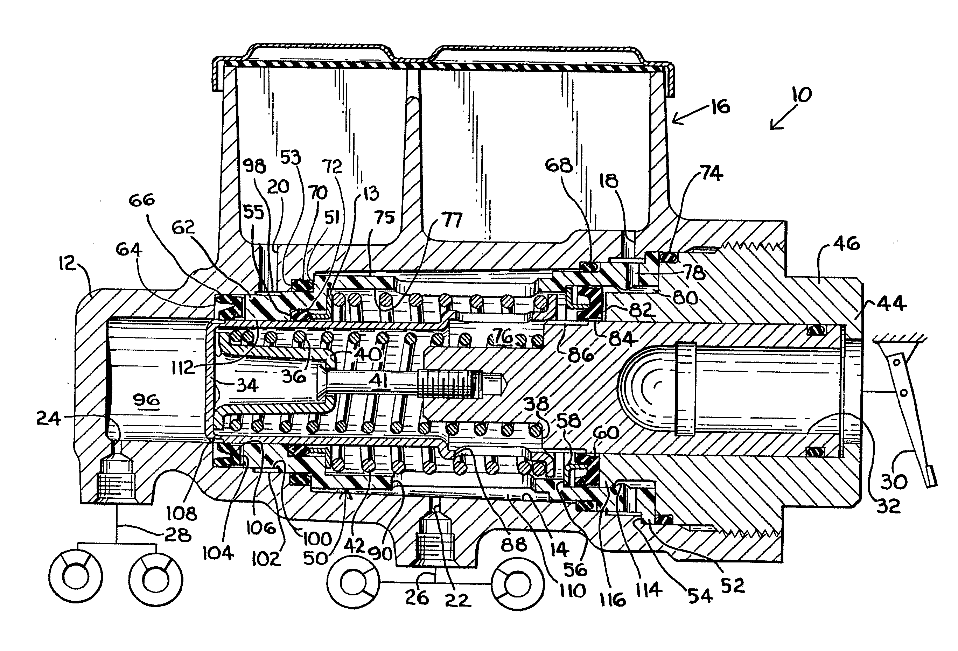

The features of the invention will become readily apparent from reading the following description of a preferred embodiment, given by way of example only and with reference to the accompanying drawing which shows in longitudinal cross section a master cylinder constructed in accordance with the present invention.

The master cylinder 10 shown in the drawing has a housing 12 in which is defined a bore 14. A reservoir 16 is formed by the housing 12 to carry fluid therein. A pair of compensation ports 18 and 20 communicate the fluid from the reservoir 16 to the bore 14 in a manner described hereinafter. A pair of outlet ports 22 and 24 communicate, respectively, with brake circuits 26 and 28. A brake pedal 30 is connected via suitable connecting means with a first piston 32 to move the latter into the bore 14 during braking. A second piston 34 is disposed within the bore 14 to move partly via spring 36 when the first piston 32 is moved. The spring 36 extends between a shoulder 38 on the first piston 32 and a retainer 40 which engages the second piston 34 and is engageable with a stem 41 to define a rest position for the second piston 34. A retraction spring 42 abutting a clip 13 biases the second piston to its rest position engaging retainer 40 and the retraction spring 42 also cooperates with spring 36 to bias the first piston 32 to its rest position abutting a flange 44 on a bearing 46.

A sleeve 50 is fixedly disposed within the bore 14. The sleeve 50 includes a flange 52 at one end abutting a step 54 on the wall of the bore 14. The sleeve forms a shoulder 56 which cooperates with a ring 58 to define a fixed position for a first lip seal 60. The other end 62 of the sleeve cooperates with another step 64 on the wall of the bore 14 to define a fixed position for a second lip seal 66.

A first O-ring seal 68 sealingly engages the outer surface of sleeve 50 and the wall of bore 14 near the port 18. A second O-ring seal 70 sealingly engages the outer surface of sleeve 50 adjacent a radially outer shoulder 51 and a shoulder 53 formed by the wall of bore 14 near the port 20. A third O-ring seal 172 sealingly engages the inner surface of sleeve 50 adjacent a radially inner shoulder 55 and the outer surface of the second piston 34, and a fourth O-ring seal 74 sealingly engages the wall of bore 14 and the bearing 46 near the port 18. The first lip seal 60 cooperates with the first piston 32, the second piston 34, the sleeve 50 and the plurality of O-ring seals 68, 70 and 72 to substantially define a first pressure chamber 76. In the rest position, fluid is communicated from the reservoir 16 to the first pressure chamber by means of the port 18, an aperture 78 on the sleeve, an axial recess 80 on the bearing, a radial recess 82 on the bearing, a recess 84 on the radial inner edge of the first lip seal 60, and a slot 86 on the first piston 32. From the first chamber 76, fluid is also communicated to the outlet 22 and the brake circuit 26 via slots 88 and 90 on the second piston and sleeve, respectively. The second lip seal 66 cooperates with the second piston 34 and the wall of bore 14 to substantially define a second pressure chamber 96. Fluid from the reservoir 16 is communicated to the second pressure chamber 96 via port 20, an intermediate recess or chamber 98 formed by a step 100 on the end 62 of sleeve 50 and a step 102 on the wall of bore 14 adjacent port 20, a clearance between the end 62 of the sleeve and the wall of bore 14, radially extending slots 104 on the right side of second lip seal 66, a recess 106 on the radial inner edge of the second lip seal 66, and a slot 108 on the second piston 34. From the second chamber 96, fluid is communicated via outlet 24 to the brake circuit 28.

In accordance with the invention, the sleeve 50 is made from a plastic material, for instance by an injection molding process. The bore 14 defines a clearance 110 with the sleeve 50 between the O-ring seals 68 and 70. Consequently, fluid pressure generated within the first pressure chamber 76 is communicated to the outer surface 75 of the sleeve between O-ring seals 68 and 70 and also to the inner surface 77 of the sleeve between first lip seal 60 and O-ring seal 72. In order to offset the forces acting against the inner and outer surfaces of the sleeve by the fluid pressure within the first chamber 76, the O-ring seals 70 and 72 are disposed within the bore 14 at the same axial position in engagement with the sleeve. In addition, the first lip seal 60 and the O-ring seal 68 are also disposed within the bore 14 at the same axial position in engagement with the sleeve. As a result the forces acting against the inner and outer surfaces of the sleeve 50 by the fluid pressure generated in chamber 76 will be substantially equal and opposite to minimize radial loading of the plastic sleeve. Moreover, the plastic sleeve will remain in its molded shape to substantially eliminate deformation of the plastic sleeve during braking.

When the plastic sleeve 50 is formed, it is provided with an enlarged radial thickness at each end. The enlarged end 62 extends from the lip seal 66 to the O-ring seal 72 to form a surface 112 slidably engaging the second piston 34. The other enlarged end forming flange 52 is also provided with a projection 114 extending radially inwardly to fit within the recess 80 and oppose a shoulder 116 formed on the bearing 46. The projection 114 cooperates with the shoulder 116 to form a releasable locking device for connecting the bearing 46 to the sleeve 50.

During braking, the first piston 32 moves to the left when pedal force is applied. The first piston moves the slot 86 out of communication with the recess 84 and contracts the volume of the first chamber 76 to generate fluid pressure therein. The fluid pressure in chamber 76 communicates with outlet 22 and brake circuit 26 and also cooperates with the contraction of spring 36 to bias the second piston 34 to move to the left contracting spring 42. When the slot 108 on piston 34 is moved out of communication with the recess 106 on lip seal 66, the volume of fluid within chamber 96 is contracted to generate fluid pressure in chamber 96 and brake circuit 28. Upon termination of braking the springs 36 and 42 cooperate to return the pistons 32 and 34 to their rest positions.

In conclusion, the plastic sleeve 50 provides a weight and cost savings over the conventional metal sleeve. The plastic sleeve is made from a molding process which is ecomonically advantageous over an extruded or stamped metal sleeve. And the plastic sleeve is pressure balanced within the master cylinder to substantially eliminate deformation of the sleeve during braking operation.

**Claims**

1. A master cylinder comprising a housing (12) with an axially extending bore (14), a pair of pistons (32, 34) movably dipsosed within the bore (14) and defining therewith a pair of pressure chambers (76, 96) in which they generate fluid pressure when moving within the bore (14), a sleeve (50) fixedly disposed within the bore (14) around said pistons and having an inner surface (77) and an outer surface (75) both exposed to the fluid pressure generated in one (76) of said pressure chambers, and two pairs of seals (60, 68; 70, 72) cooperating with the sleeve to seal the latter within said one pressure chamber, characterized in that at least one pair (70, 72 or 60, 68) of said seals engage said sleeve (50) at the same axial position so that fluid pressure acting against the inner surface (77) adjacent said one pair of seals will be substantially offset by the fluid pressure acting against the outer surface (75) adjacent the same pair of seals.

2. A master cylinder according to claim 1, characterized in that the sleeve (50) has a substantially uniform thickness except for one end (62) thereof which is provided with an enlarged thickness.

3. A master cylinder according to claim 2, characterized in that said one end (62) substantially adjoins one pair (70, 72) of said seals.

4. A master cylinder according to any of claims 1 to 3, and wherein the wall of the bore (14) defines a shoulder (53) which engages one of said seals (70), characterized in that said shoulder (53) substantially aligns with another shoulder (55) formed on said sleeve (50) and engaging another (72) of said seals.

5. A master cylinder according to any of claims 1 to 4, characterized in that both pairs of seals (60, 68 or 70, 72) sealingly engage the sleeve (50) and are disposed axially within the bore (14) in alignment to offset the fluid pressure acting against the inner and outer surfaces (77, 75) of said sleeve.

6. A master cylinder according to any of claims 1 to 5, characterized in that said sleeve (50) is made from a plastic material.

## Revendications

1. Un maître-cylindre comprenant un corps (12) contenant un alésage (14) s'étendant axialement, une paire de pistons (32, 34) montés de manière mobile à l'intérieur de l'alésage (14) délimitant avec lui une paire de chambres de pression (76, 96) dans lesquelles ils engendrent une pression de fluide lorsqu'ils se déplacent à l'intérieur de l'alésage (14), un manchon (50) fixement disposé à l'intérieur de l'alésage autour desdits pistons et ayant une surface intérieure (77) et une surface extérieure (75) toutes deux exposées à la pression de fluide engendrée dans une première (76) desdites chambres de pression et deux paires de joints d'étanchéité (60, 68; 70, 72) coopérant avec le manchon pour assurer l'étanchéité de ce dernier à l'intérieur de ladite première chambre de pression, caractérisé en ce qu'au moins les deux joints d'une paire (70, 72 ou 60, 68) desdits joints d'étanchéité sont en appui contre ledit manchon (50) sensiblement à la même position axiale de sorte que la pression de fluide agissant sur la surface intérieure (77) adjacente à ladite paire de joints d'étanchéité est sensiblement compensée par la pression de fluide agissant sur la surface extérieure (75) adjacente à la même paire de joints d'échantéité.

2. Un maître-cylindre selon la revendication 1, caractérisé en ce que le manchon (50) a une épaisseur sensiblement uniforme excepté à une première extrémité (62) qui comporte une sur-épaisseur.

3. Un maître-cylindre selon la revendication 2, caractérisé en ce que ladite première extrémité (62) est sensiblement adjacente à une paire (70, 72) desdits joints d'étanchéité.

4. Un maître-cylindre selon l'une quelconque des revendications 1 à 3 et dans lequel la paroi de l'alésage (14) comporte un épaulement (53) qui est en appui contre l'un desdits joints d'étanchéité (70), caractérisé en ce que ledit épaulement (53) est sensiblement aligné avec un autre épaulement (55) formé sur ledit manchon (50) et en appui contre un autre (72) desdits joints d'étanchéité.

5. Un maître-cylindre selon l'une quelconque des revendications 1 à 4, caractérisé en ce que les deux paires de joints d'étanchéité (60, 68 ou 70, 72) sont en appui étanche contre le manchon (50) et sont disposées axialement à l'intérieur de l'alésage (14), en alignement, pour compenser la pression de fluide agissant sur les surfaces intérieure et extérieure (77, 75) dudit manchon.

6. Un maître-cylindre selon l'une quelconque des revendications 1 à 5, caractérisé en ce que ledit manchon (50) est fabriqué en une matière plastique.

## Patentansprüche

1. Hauptbremszylinder mit einem Gehäuse (12), das eine axial verlaufende Bohrung (14) aufweist, zwei Kolben (32, 34), die in der Bohrung (14) angeordnet sind und mit dieser zwei Druckkammern (76, 96) bilden, in denen sie bei einer Bewegung innerhalb der Bohrung (14) einen Strömungsmitteldruck erzeugen, einer Hülse (50), die in der Bohrung (14) um die Kolben herum fest angeordnet ist und sowohl mit einer Innerfläche (77) wie auch einer Außenfläche (75) dem Strömungsmitteldruck ausgesetzt ist, der in einer (76) der Druckkammern erzeugt wird, und zwei Paaren von Dichtungen (60, 68; 70, 72), die mit der Hülse zusammenwirken, um diese innerhalb der besagten einen Druckkammer abzudichten, dadurch gekennzeichnet, daß zumindest ein Paar (70, 72 oder 60, 68) der Dichtungen an der Hülse (50) an der gleichen axialen Stelle angreifen, so daß der Strömungsmitteldruck, der auf die Innernfläche (77) angrenzend an dem besagten einen Paar von Dichtungen einwirkt, im wesentlichen ausgeglichen wird durch den Strömungsmitteldruck, der auf die Außenfläche (75) angrenzend an dem gleichen Paar von Dichtungen wirkt.

2. Hauptbremszylinder nach Anspruch 1, dadurch gekennzeichnet, daß die Hülse (50) eine im wesentlichen gleichförmige Dicke hat ausgenommen an ihren einen Ende (62) das mit einer vergrößerten Dicke versehen ist.

3. Hauptbremszylinder nach Anspruch 2, dadurch gekennzeichnet, daß das besagte eine Ende (62) im wesentlichen angrenzt an einem Paar (70, 72) der Dichtungen.

4. Hauptbremszylinder nach einem der Ansprüche (1—3, bei dem die Wand der Bohrung (14) eine Schulter (53) bildet, die an einer der Dichtungen (70) angreift, dadurch gekennzeichnet, daß die Schulter (53) im wesentlichen zu einer anderen Schulter (55) ausgerichtet ist, die an der Hülse (50) gebildet ist und an einer anderen (72) der Dichtungen angreift.

5. Hauptbremszylinder nach einem der Ansprüche 1—4, dadurch gekennzeichnet, daß beide Paare von Dichtungen (60, 68 oder 70, 72) an der Hülse (50) dichtend angreifen und axial innerhalb der Bohrung (14) ausgerichtet angeordnet sind, um den Strömungsmitteldruck, der auf die Innen- und Außenfläche (77, 75) der Hülse einwirkt, auszugleichen.

6. Hauptbremszylinder nach einem der Ansprüche 1—5, dadurch gekennzeichnet, daß die Hülse (50) aus Kunststoff hergestellt ist.

0 067 100